# EUROPÄISCHE PATENTSCHRIFT

(11) **EP 3 214 413 B1**
(45) Veröffentlichungstag und Bekanntmachung des Hinweises auf die Patenterteilung: **14.08.2019**
(21) Anmeldenummer: 16201603.4
(22) Anmeldetag: 01.12.2016
(51) Int. Cl.: G01D 5/347

(54) **VORRICHTUNG UND VERFAHREN ZUM ANBRINGEN EINER MASSVERKÖRPERUNG**
DEVICE AND METHOD FOR APPLYING A SOLID MEASURE
DISPOSITIF ET PROCÉDÉ D'APPLICATION D'UNE MESURE MATÉRIALISÉE

(30) Priorität: 03.03.2016 DE 102016203509
(43) Veröffentlichungstag der Anmeldung: 06.09.2017
(73) Patentinhaber: Dr. Johannes Heidenhain GmbH, 83301 Traunreut (DE)
(72) Erfinder: FISCHER, Peter, 83253 Rimsting (DE)

(56) Entgegenhaltungen:
- EP-B1- 0 388 453
- DE-A1- 10 229 888

## Beschreibung

### GEBIET DER TECHNIK

Die vorliegende Erfindung betrifft eine Vorrichtung zum Anbringen einer Maßverkörperung gemäß den Merkmalen des Anspruchs 1 sowie ein Verfahren zum Anbringen einer Maßverkörperung gemäß den Merkmalen des Anspruchs 7.

### STAND DER TECHNIK

Die DE 10 2015 006 222 A1 offenbart eine gattungsbildende Vorrichtung zum Anbringen einer Maßverkörperung einer Positionsmesseinrichtung an eine Anbaufläche eines Trägers, umfassend einen Grundkörper sowie einen Stempel, der relativ zum Grundkörper in Richtung der Anbaufläche verlagerbar ist, und der ein Halteelement zur lösbaren Halterung der Maßverkörperung aufweist.

Beim Anbringen der Maßverkörperung muss der Stempel gegen eine Federkraft niedergedrückt werden. Die auf die Maßverkörperung dabei einwirkende Andruckkraft ist abhängig von der Kraft, die der Anwender auf den Stempel ausübt.

Die EP 0 388 453 B1 zeigt eine Vorrichtung und ein Verfahren zum Anbringen eines Maßbandes. Das Maßband wird durch die Vorrichtung hindurchgeführt und mittels einer Federkraft an die Anbaufläche angedrückt. Eine ähnliche Vorrichtung ist in der DE 102 29 888 A1 beschrieben.

### ZUSAMMENFASSUNG DER ERFINDUNG

Der vorliegenden Erfindung liegt die Aufgabe zugrunde, eine Vorrichtung zum Anbringen einer Maßverkörperung einer Positionsmesseinrichtung anzugeben, die kompakt aufgebaut ist und mit der eine Maßverkörperung an einer Anbaufläche eines Trägers reproduzierbar aufgebracht werden kann, so dass damit eine genaue Positionsmessung ermöglicht wird.

Diese Aufgabe wird erfindungsgemäß durch die Vorrichtung mit den Merkmalen des Anspruchs 1 gelöst. Diese Vorrichtung umfasst einen Grundkörper und einen Stempel, der relativ zum Grundkörper längs einer Achse senkrecht zur Anbaufläche verlaufend verlagerbar ist, und der ein Halteelement zur lösbaren Halterung der Maßverkörperung aufweist. Zwischen dem Grundkörper und dem Stempel ist ein Federelement derart angeordnet, dass das Federelement beim Anbringen der Maßverkörperung eine Druckkraft längs der Achse hin zu der Anbaufläche auf den Stempel ausübt. Mit dieser Vorrichtung kann eine Maßverkörperung reproduzierbar aufgeklebt werden, wobei zwischen der Maßverkörperung und der Anbaufläche ein Klebefilm angeordnet ist, auf den eine durch die Konstruktion der Vorrichtung vorgegebene Andruckkraft wirkt.

Vorzugsweise besteht das Federelement aus einer Anordnung von mehreren Druckfedern, die in gegenseitigem Abstand zueinander zwischen dem Grundkörper und dem Stempel verteilt angeordnet sind.

Das Halteelement ist ein Klemmmechanismus, der dazu ausgebildet ist, die Maßverkörperung derart am Stempel klemmend zu halten, dass die Maßverkörperung beim Anbringen mit der Druckkraft auf die Anbaufläche gedrängt wird und die Maßverkörperung nach erfolgtem Anbringen vom Stempel gelöst werden kann.

Die erfindungsgemäße Vorrichtung kann dazu ausgebildet sein, die Druckkraft durch Verlagerung des Stempels relativ zum Grundkörper längs der Achse zu erzeugen, indem sich das Federelement dabei spannt, oder die Vorrichtung kann dazu ausgebildet sein, die Druckkraft durch Verlagerung des Stempels relativ zum Grundkörper längs der Achse zu erzeugen, wobei sich das Federelement dabei entspannt.

Bei beiden Möglichkeiten ist der Weg (Federweg) bei der Verlagerung des Stempels längs der Achse durch ein erstes Widerlager des Grundkörpers und ein zweites Widerlager des Grundkörpers vorgegeben. Das erste Widerlager positioniert den Stempel in einer Position längs der Achse am Grundkörper, von der aus die Verlagerung ermöglicht wird und das zweite Widerlager ist dazu ausgebildet, den Grundkörper beim Anbringen der Maßverkörperung bezüglich des Trägers längs der Achse zu positionieren.

Die Maßverkörperung ist vorzugsweise ein kurzer Maßstab, mit einer Länge von wenigen cm, bestehend aus Stahl oder Glas bzw. Glaskeramik. Die Maßverkörperung trägt eine Messteilung in Form einer absoluten Codierung oder einer inkrementalen Codierung. Darüber hinaus kann die Messteilung lichtelektrisch, magnetisch, kapazitiv oder induktiv abtastbar ausgebildet sein.

Ein Verfahren zum Anbringen einer Maßverkörperung mit der erfindungsgemäß ausgebildeten Vorrichtung ist im Anspruch 7 angegeben.

Das Verfahren umfasst folgende Verfahrensschritte:
- Halterung der Maßverkörperung an dem Stempel mittels des Halteelementes durch Klemmen;
- Positionieren des Grundkörpers am Träger längs der Achse und Ausüben der Druckkraft durch das Federelement, welche die Maßverkörperung längs der Achse an die Anbaufläche drängt;
- Lösen der Maßverkörperung vom Stempel.

Die Maßverkörperung ist an ihrer Unterseite, also der Anbaufläche gegenüberliegend, mit einem Klebefilm versehen, so dass die Maßverkörperung beim Aufbringen der Druckkraft aufgeklebt wird. Nach diesem Aufkleben erfolgt das Lösen der Maßverkörperung vom Stempel.

Vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: einen Querschnitt einer ersten erfindungsgemäßen Vorrichtung zum Anbringen einer Maßverkörperung;
- Figur 2: die erste Vorrichtung gemäß Figur 1 beim Anbringen einer Maßverkörperung auf einen Träger;
- Figur 3: einen vergrößert dargestellten Ausschnitt aus der Figur 2;
- Figur 4: die erste Vorrichtung von unten betrachtet;
- Figur 5: einen Längsschnitt V - V der ersten Vorrichtung;
- Figur 6: die erste Vorrichtung beim Anbringen einer Maßverkörperung;
- Figur 7: einen Querschnitt einer zweiten erfindungsgemäßen Vorrichtung zum Anbringen einer Maßverkörperung;
- Figur 8: die zweite Vorrichtung beim Anbringen einer Maßverkörperung auf einen Träger;
- Figur 9: eine weitere Ansicht der zweiten Vorrichtung;
- Figur 10: einen Längsschnitt X - X der zweiten Vorrichtung;
- Figur 11: die zweite Vorrichtung beim Anbringen einer Maßverkörperung auf einen Träger;
- Figur 12: die zweite Vorrichtung beim Anbringen einer Maßverkörperung auf einen Träger.

### BESCHREIBUNG DER AUSFÜHRUNGSFORMEN

Die Erfindung wird anhand zweier Ausführungsbeispiele erläutert. Bei dem ersten Ausführungsbeispiel wird die erfindungsgemäße Vorrichtung erste Vorrichtung genannt und bei dem zweiten Ausführungsbeispiel zweite Vorrichtung. Funktionsgleiche Elemente sind in den beiden Ausführungsbeispielen jeweils mit dem gleichen Bezugszeichen versehen. Den erfindungsgemäßen Vorrichtungen ist gemeinsam, dass sie dazu ausgelegt sind eine Maßverkörperung 4 an einer Anbaufläche 51 durch Kleben anzubringen, wozu die Vorrichtungen die Maßverkörperung 4 mit einer definierten Andruckkraft F auf die Anbaufläche 51 andrücken. Zur klebenden Befestigung der Maßverkörperung 4 ist diese an seiner Unterseite und / oder die Anbaufläche 51 mit einem Klebefilm 41 versehen.

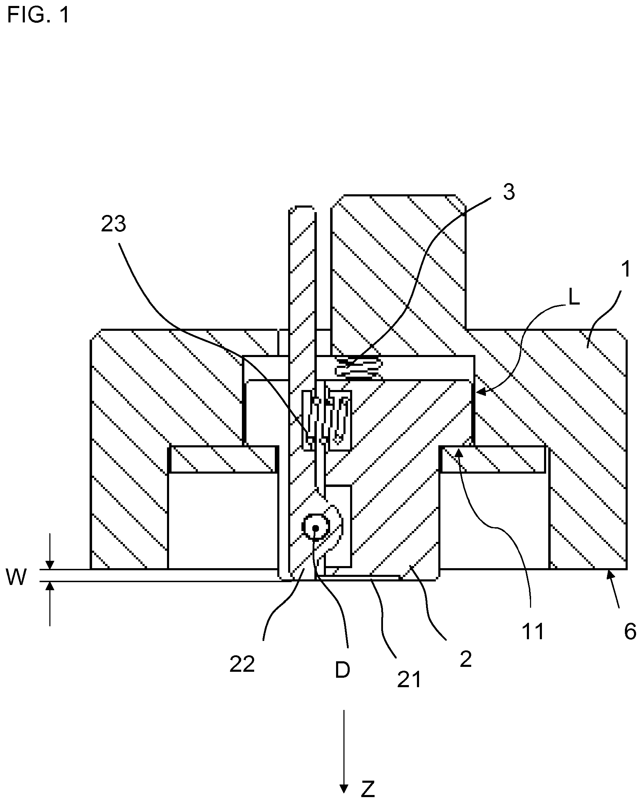

Das erste Ausführungsbeispiel der erfindungsgemäßen Vorrichtung sowie das damit ausgeführte Verfahren wird nachfolgend anhand der Figuren 1 bis 6 erläutert. Diese erste Vorrichtung zum Anbringen einer Maßverkörperung 4 einer Positionsmesseinrichtung an eine Anbaufläche 51 eines Trägers 5 umfasst einen Grundkörper 1 und einen Stempel 2. Der Stempel 2 ist relativ zum Grundkörper 1 längs einer Achse Z senkrecht zur Anbaufläche 51 verlagerbar. Hierzu weist der Grundkörper 1 eine Längsführung L auf, an welcher der Stempel 2 längs der Achse Z spielfrei längsbewegt werden kann.

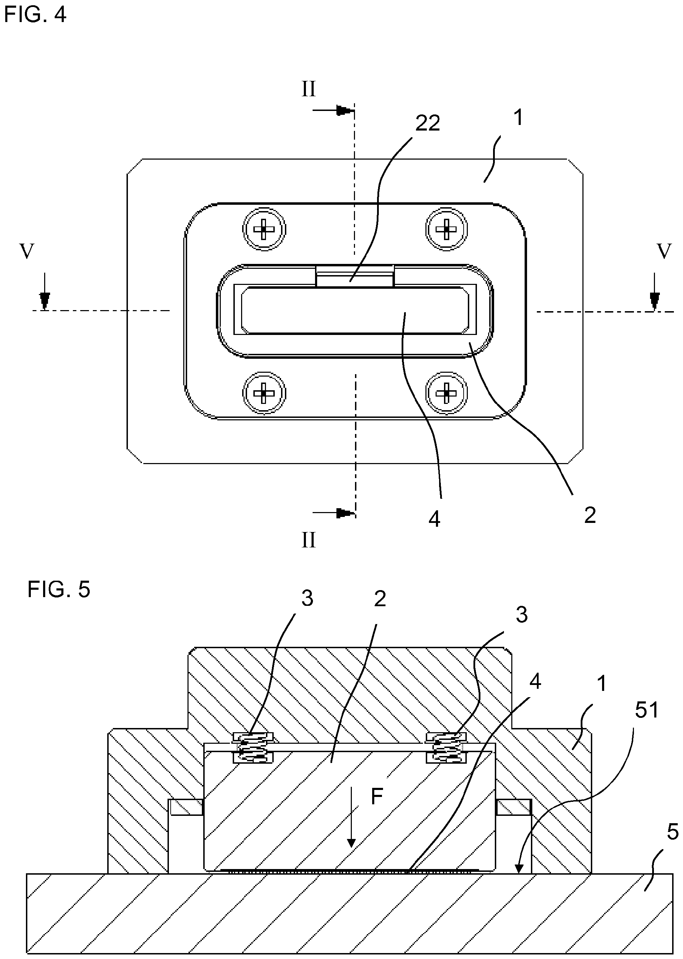

Zwischen dem Grundkörper 1 und dem Stempel 2 ist ein Federelement 3 angeordnet, welches den Stempel 2 relativ zum Grundkörper 1 in Richtung der Anbaufläche 51, also in Z-Richtung, drängt. Wie aus Figur 5 ersichtlich ist, wird das Federelement 3 vorzugsweise aus einer Anordnung von mehreren Druckfedern gebildet, wobei die Druckfedern in gegenseitigem Abstand zueinander zwischen dem Grundkörper 1 und dem Stempel 2 verteilt angeordnet sind, so dass die Federkraft auf den Stempel 2 möglichst gleichmäßig verteilt wird und somit die Maßverkörperung 4 über die gesamte Länge homogen mit der Andruckkraft F auf die Anbaufläche 51 angedrückt wird.

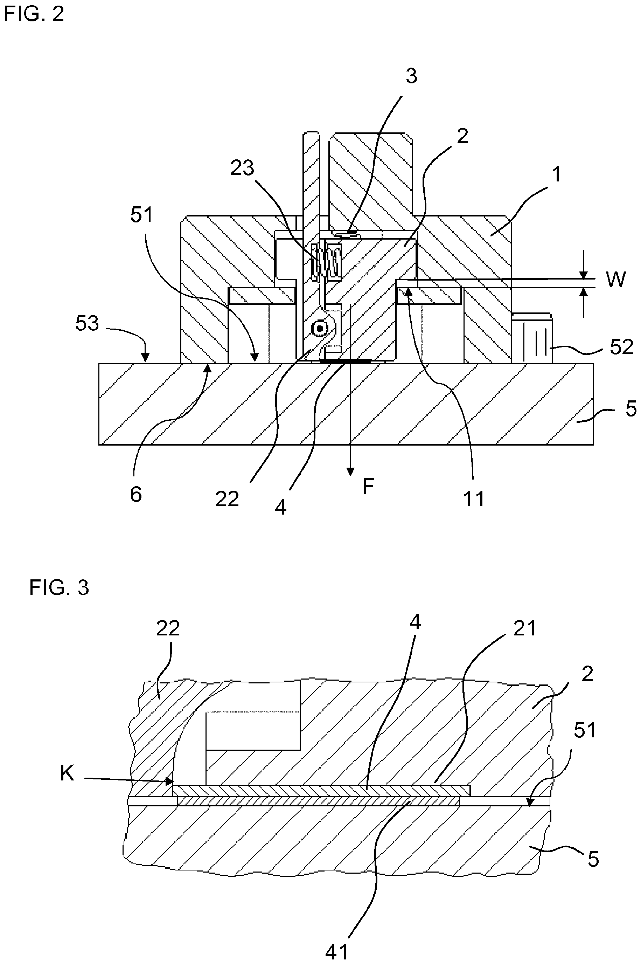

Der Stempel 2 weist ein Halteelement 22 zur lösbaren Halterung der Maßverkörperung 4 auf. Das Halteelement 22 ist dazu ausgebildet, die Maßverkörperung 4 so lange am Stempel 2 klemmend zu halten, bis diese an der Anbaufläche 51 befestigt ist und die Klemmung der Maßverkörperung 4 am Halteelement 22 ist nach erfolgter Befestigung der Maßverkörperung 4 an der Anbaufläche 51 aufhebbar. Im dargestellten Ausführungsbeispiel ist das Halteelement 22 ein Klemmmechanismus. Zur Aufnahme der Maßverkörperung 4 am Stempel 2 weist dieser eine Ausnehmung 21 auf. Zur Fixierung der Maßverkörperung 4 in dieser Ausnehmung 21 des Stempels 2 umfasst das Halteelement 22 einen Hebel, der um einen Drehpunkt D drehbar ist und mittels einer Feder 23 die Maßverkörperung 4 mit einer Klemmkraft K in der Ausnehmung 21 hält, wie in Figur 3 dargestellt ist. Der federvorgespannte Hebel drängt die Maßverkörperung 4 an einen Anschlag der Ausnehmung 21, wodurch die Maßverkörperung 4 definiert am Stempel 2 positioniert ist. Die Tiefe der Ausnehmung 21 in Richtung Z ist angepasst an die Dicke der Maßverkörperung 4 und derart gewählt, dass der Klebefilm 41 übersteht.

Am Grundkörper 1 ist ein erstes Widerlager 11 angeordnet, an dem sich der Stempel 2 im Ruhezustand abstützt. Das Federelement 3 drängt den Stempel 2 in Richtung der Anbaufläche 51, also in Z-Richtung, an das Widerlager 11.

Das Widerlager 11 sorgt dafür, dass der Stempel 2 in einer definierten Z-Position am Grundkörper 1 gehalten wird. In Figur 1 ist der Stempel 2 in der Ruhelage dargestellt. In dieser Ruhelage wird die Maßverkörperung 4 an dem Stempel 2 mittels des Halteelementes 22 lösbar fixiert.

In einem nächsten Schritt wird der Grundkörper 1 am Träger 5 positioniert. Die Positionierung in einer Richtung quer zur Z-Richtung erfolgt an einem Positionierelement 52, beispielsweise stiftförmig ausgeführt. Im Weiteren wird der Grundkörper 1 auf den Träger 5 aufgesetzt. Dabei wird eine Andruckkraft F eingeleitet, welche den Stempel 2 und somit die Maßverkörperung 4 an die Anbaufläche 51 drängt. Die Andruckkraft F ist bestimmt durch die Federkennlinie des Federelementes 3 und den Federweg W, um den der Stempel 2 gegen die das Federelement 3 ausübende Kraft vom Widerlager 11 wegbewegt wird. Der Federweg W ist also bestimmt durch die Z-Position des ersten Widerlagers 11 und der Z-Position eines zweiten Widerlagers 6 des Grundkörpers 1. Dieses zweite Widerlager 6 ist als Anschlagfläche ausgebildet, welche mit einer Bezugsfläche 53 des Trägers 5 in Kontakt gebracht wird und die Z-Bewegung des Grundkörpers begrenzt.

Die Andruckkraft F ist somit von der Konstruktion der Vorrichtung selbst bestimmt. Die Maßverkörperung 4 wird dadurch mit einer definierten und reproduzierbaren Andruckkraft F auf die Anbaufläche 51 gedrückt und aufgeklebt.

Die Lage des ersten Widerlagers 11 oder des zweiten Widerlagers 6 kann in nicht gezeigter Weise am Grundkörper 1 justierbar ausgestaltet sein. Dies kann vorteilhaft sein, um unterschiedliche Z-Positionen (Höhenunterschiede) zwischen der Anbaufläche 51 und der Bezugsfläche 53 auszugleichen.

Zum Aufkleben der Maßverkörperung 4 auf die Anbaufläche 51 mit der definierten und reproduzierbaren Andruckkraft F ist diese auf ihrer Unterseite mit einem Klebefilm 41 versehen, wie in Figur 3 dargestellt ist.

Nach erfolgter flächiger Anhaftung der Maßverkörperung 4 mit der Andruckkraft F an die Anbaufläche 51 wird die Maßverkörperung vom Stempel 2 mittels des Halteelementes 22 gelöst und die Vorrichtung von dem Träger 5 entfernt.

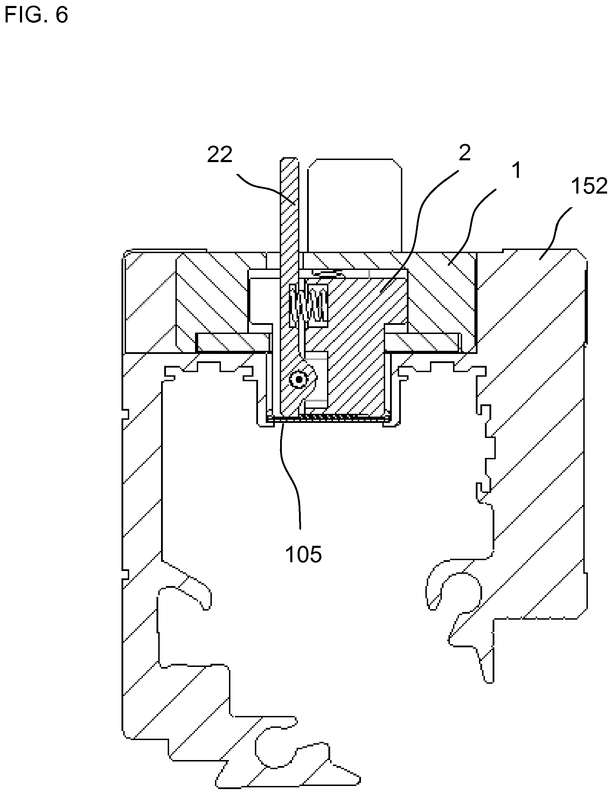

In Figur 6 ist der Träger 105 ein Maßband, auf dessen Rückseite die Maßverkörperung 4 aufgeklebt werden soll. In diesem Fall dienen die Seitenwände einer Öffnung eines Hohlprofils zur Ausrichtung des Grundkörpers 1 relativ zum Träger 105, so dass das Hohlprofil selbst als Positionierelement 152 zur Ausrichtung der Vorrichtung senkrecht zur Achse Z (Z-Richtung) fungiert.

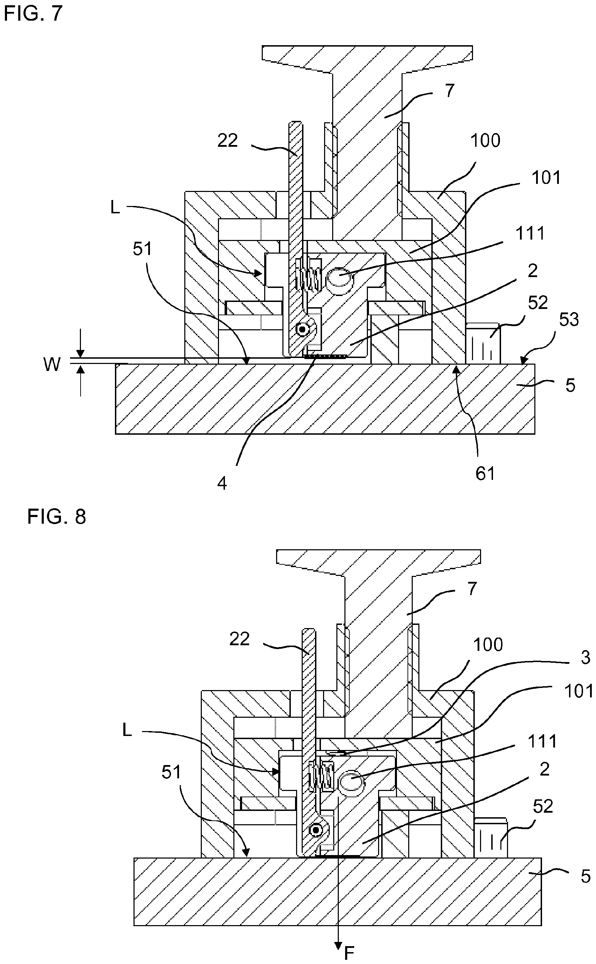

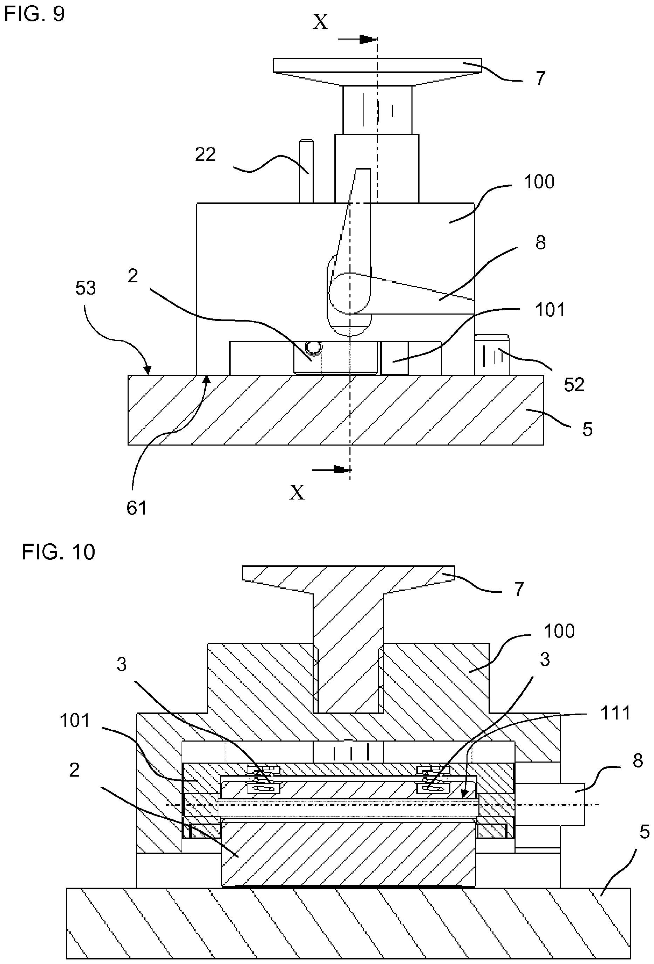

Nachfolgend wird anhand der Figuren 7 bis 12 das zweite Ausführungsbeispiel, also die zweite erfindungsgemäße Vorrichtung, näher erläutert.

Diese zweite Vorrichtung unterscheidet sich von der ersten Vorrichtung durch zwei weitere darin integrierte Funktionen.

Die erste weitere Funktion ist die besondere Ausbildung des ersten Widerlagers 111. Das Widerlager 111 positioniert in diesem Fall den Stempel 2 an dem Grundkörper 101 in der Ruhelage gemäß Figur 7 derart, dass die Maßverkörperung 4 bei am Träger 5 positioniertem Grundkörper 101 zur Anbaufläche 51 beabstandet angeordnet ist. Von dieser Ruhelage ausgehend - also in bereits positioniertem Zustand - wird das Widerlager 111 außer Eingriff gebracht, so dass die Kraft F des Federelementes 3 zur Wirkung kommt und den Stempel 2 mit der daran angebrachten Maßverkörperung 4 an die Anbaufläche 51 drängt. Die Druckkraft F wird also durch Entspannen des Federelementes 3 generiert.

Die Andruckkraft F ist bestimmt durch die Federkennlinie des Federelementes 3 und durch den Federweg W, um den der Stempel 2 gegen die Anbaufläche 51 wegbewegt wird. Der Federweg W ist also bestimmt durch die Z-Position des ersten Widerlagers 111 und durch die Z-Position eines zweiten Widerlagers 61 des Grundkörpers 101. Dieses zweite Widerlager 61 ist als Anschlagfläche ausgebildet, welche mit einer Bezugsfläche 53 des Trägers 5 in Kontakt gebracht wird und die Z-Position des Grundkörpers 101 vorgibt.

Im dargestellten Ausführungsbeispiel dient zum außer Eingriff bringen des Widerlagers 111 ein Exzenter. Insbesondere ist das Widerlager 111 selbst von einer exzentrisch gelagerten Stange gebildet, die mittels einer Handhabe 8 verdrehbar ist.

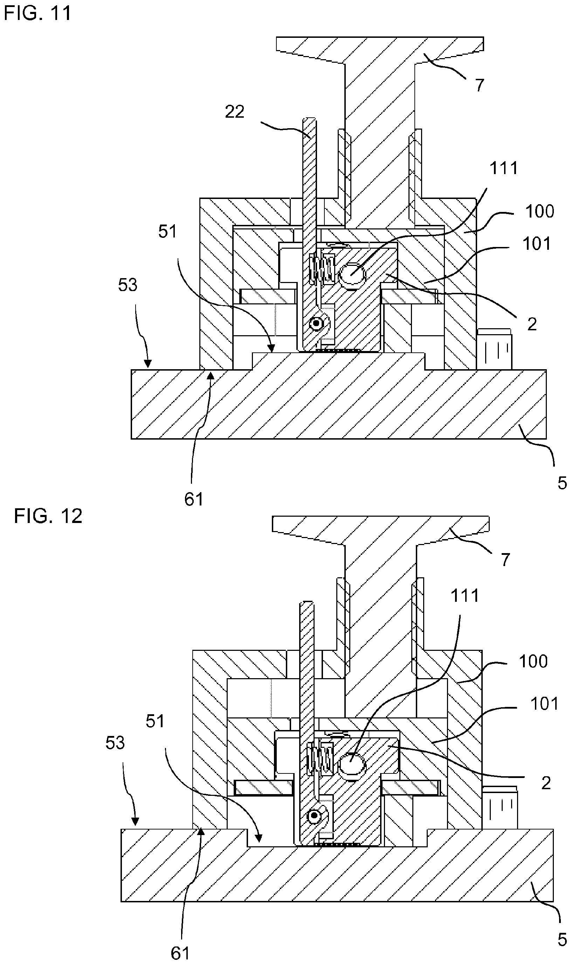

Die zweite weitere Funktion besteht darin, dass der Grundkörper 101 eine Halterung 100 umfasst, an welcher der Grundkörper 101 gemeinsam mit dem Stempel 2 in Z-Richtung justierbar befestigt ist. Die Justierung erfolgt im Beispiel mittels einer Schraube 7. Bei dem Anbringen der Maßverkörperung 4 an dem Träger 5 wird die Halterung 100 gegenüber dem Träger 5 positioniert. In diesem Fall weist die Halterung 100 das Widerlager 61 in Form einer Anschlagfläche auf, welche beim Aufkleben der Maßverkörperung 4 auf korrespondierende Bezugsflächen 53 des Trägers 5, die parallel zur Anbaufläche 51 ausgerichtet sind, aufgesetzt werden. Wie die Figuren 11 und 12 zeigen, können damit Lageunterschiede der Anbaufläche 51 in Z-Richtung ausgeglichen werden.

Die Maßverkörperung 4 ist beispielsweise bandförmig ausgebildet, insbesondere als ein kurzes Stahlband mit einer Länge von wenigen cm.

## Patentansprüche

1. Vorrichtung zum Anbringen einer Maßverkörperung (4) einer Positionsmesseinrichtung an eine Anbaufläche (51) eines Trägers (5, 105), umfassend
- einen Grundkörper (1, 101);
- einen Stempel (2), der relativ zum Grundkörper (1, 101) längs einer Achse (Z) senkrecht zur Anbaufläche (51) verlagerbar ist, und der ein Halteelement (22) zur lösbaren Halterung der Maßverkörperung (4) aufweist;
**gekennzeichnet durch**
- ein Federelement (3), das derart zwischen dem Grundkörper (1, 101) und dem Stempel (2) angeordnet ist, dass das Federelement (3) beim Anbringen der Maßverkörperung (4) an die Anbaufläche (51) auf den Stempel (2) eine Druckkraft (F) längs der Achse (Z) hin zu der Anbaufläche (51) ausübt, wobei
- der Grundkörper (1, 101) an einer ersten Position entlang der Achse (Z) ein erstes Widerlager (11, 111) aufweist, an dem sich der Stempel (2) im Ruhezustand abstützt, so dass der Stempel (2) in einer definierten Position entlang der Achse (Z) am Grundkörper (1, 101) gehalten wird, und wobei
- der Grundkörper (1, 101) an einer zweiten Position entlang der Achse (Z) ein zweites Widerlager (6, 61) aufweist, das als Anschlagfläche ausgebildet ist und beim Anbringen der Maßverkörperung (4) an den Träger (5, 105) mit einer Bezugsfläche (53) des Trägers (5, 105) in Kontakt gebracht wird, und wobei
- das Halteelement (22) ein Klemmmechanismus ist, der dazu ausgebildet ist, die Maßverkörperung (4) derart am Stempel (2) klemmend zu halten, dass die Maßverkörperung (4) beim Anbringen mit der Druckkraft (F) auf die Anbaufläche (51) gedrängt wird.

2. Vorrichtung nach Anspruch 1, wobei das Federelement (3) aus einer Anordnung von mehreren Druckfedern gebildet ist, wobei die Druckfedern in gegenseitigem Abstand zueinander zwischen dem Grundkörper (1, 101) und dem Stempel (2) angeordnet sind.

3. Vorrichtung nach Anspruch 1 oder 2, wobei der Klemmmechanismus ein federvorgespannter Hebel ist.

4. Vorrichtung nach einem der vorhergehenden Ansprüche, wobei sie dazu ausgebildet ist, die Druckkraft (F) durch Verlagerung des Stempels (2) relativ zum Grundkörper (1) längs der Achse (Z) zu erzeugen, indem sich das Federelement (3) dabei spannt.

5. Vorrichtung nach einem der Ansprüche 1 bis 3, wobei sie dazu ausgebildet ist, die Druckkraft (F) durch Verlagerung des Stempels (2) relativ zum Grundkörper (101) längs der Achse (Z) zu erzeugen, wobei sich das Federelement (3) dabei entspannt.

6. Vorrichtung nach Anspruch 4 oder 5, wobei der Weg (W) der Verlagerung des Stempels (2) längs der Achse (Z) durch das erste Widerlager (11, 111) des Grundkörpers (1, 101) und das zweite Widerlager (6, 61) des Grundkörpers (1, 101) vorgegeben ist, wobei das erste Widerlager (11, 111) den Stempel (2) in einer Position längs der Achse (Z) am Grundkörper (1, 101) positioniert, von der aus die Verlagerung ermöglicht wird und das zweite Widerlager (6, 61) dazu ausgebildet ist, den Grundkörper (1, 101) beim Anbringen der Maßverkörperung (4) bezüglich des Trägers (5, 105) längs der Achse (Z) zu positionieren.

7. Verfahren zum Anbringen einer Maßverkörperung (4) einer Positionsmesseinrichtung an einer Anbaufläche (51) eines Trägers (5, 105) mit einer Vorrichtung nach einem der vorhergehenden Ansprüche, **gekennzeichnet durch** die folgenden Verfahrensschritte:
- Halterung der Maßverkörperung (4) an dem Stempel (2) mit dem Halteelement (22) durch Klemmen;
- Positionieren des Grundkörpers (1, 101) am Träger (5, 105) längs der Achse (Z) und Ausüben der Druckkraft (F) durch das Federelement (3), welche die Maßverkörperung (4) längs der Achse (Z) an die Anbaufläche (51) drängt;
- Lösen der Maßverkörperung (4) vom Stempel (2).

8. Verfahren nach Anspruch 7, wobei die Maßverkörperung (4) einen Klebefilm (41) aufweist, und die Druckkraft (F) die Maßverkörperung (4) mit ihrem Klebefilm (41) an die Anbaufläche (51) drängt.

## Claims

1. Device for applying a material measure (4) of a position measuring apparatus to a mounting surface (51) of a carrier (5, 105), comprising
- a base body (1, 101),
- a punch (2), which can be displaced relative to the base body (1, 101) along an axis (Z) at right angles to the mounting surface (51), and which has a holding element (22) for the detachable holding of the material measure (4),
**characterized by**
- a spring element (3), which is arranged between the base body (1, 101) and the punch (2) in such a way that, during the application of the material measure (4) to the mounting surface (51), the spring element (3) exerts a compressive force (F) on the punch (2) along the axis (Z) towards the mounting surface (51), wherein
- at a first position along the axis (Z), the base body (1, 101) has a first abutment (11, 111), on which the punch (2) is supported when in the rest state, so that the punch (2) is held on the base body (1, 101) in a defined position along the axis (Z), and wherein
- at a second position along the axis (Z), the base body (1, 101) has a second abutment (6, 61), which is formed as a stop surface and, during the application of the material measure (4) to the carrier (5, 105), is brought into contact with a reference surface (53) of the carrier (5, 105), and wherein
- the holding element (22) is a clamping mechanism, which is designed to hold the material measure (4) on the punch (2) in a clamping manner in such a way that the material measure (4) is forced onto the mounting surface (51) by the compressive force (F) during the application.

2. Device according to Claim 1, wherein the spring element (3) is formed from an arrangement of multiple compression springs, wherein the compression springs are arranged at a distance from one another between the base body (1, 101) and the punch (2) .

3. Device according to Claim 1 or 2, wherein the clamping mechanism is a spring-preloaded lever.

4. Device according to one of the preceding claims, wherein it is designed to generate the compressive force (F) by displacing the punch (2) relative to the base body (1) along the axis (Z) by the spring element (3) being tensioned.

5. Device according to one of Claims 1 to 3, wherein it is designed to generate the compressive force (F) by displacing the punch (2) relative to the base body (101) along the axis (Z), wherein the spring element (3) relaxes.

6. Device according to Claim 4 or 5, wherein the path (W) of the displacement of the punch (2) along the axis (Z) is predefined by the first abutment (11, 111) of the base body (1, 101) and the second abutment (6, 61) of the base body (1, 101), wherein the first abutment (11, 111) positions the punch (2) in a position along the axis (Z) on the base body (1, 101) from which the displacement is made possible, and the second abutment (6, 61) is designed to position the base body (1, 101) along the axis (Z) with respect to the carrier (5, 105) during the application of the material measure (4).

7. Method for applying a material measure (4) of a position measuring apparatus to a mounting surface (51) of a carrier (5, 105) with a device according to one of the preceding claims,
**characterized by** the following method steps:
- holding the material measure (4) on the punch (2) having the holding element (22) by clamping;
- positioning the base body (1, 101) on the carrier (5, 105) along the axis (Z) and exerting the compressive force (F) by the spring element (3), which forces the material measure (4) onto the mounting surface (51) along the axis (Z);
- detaching the material measure (4) from the punch (2) .

8. Method according to Claim 7, wherein the material measure (4) has an adhesive film (41), and the compressive force (F) forces the material measure (4) with its adhesive film (41) onto the mounting surface (51).

## Revendications

1. Dispositif de montage d'un étalon (4) d'un moyen de mesure de position sur une surface de montage (51) d'un support (5, 105), le dispositif comprenant
- un corps de base (1, 101) ;
- un poinçon (2) qui est déplaçable par rapport au corps de base (1, 101) le long d'un axe (Z) perpendiculaire à la surface de montage (51) et qui comporte un élément de retenue (22) destiné à maintenir de manière amovible l'étalon (4) ;
**caractérisé par**
- un élément à ressort (3) qui est disposé entre le corps de base (1, 101) et le poinçon (2) de sorte que l'élément à ressort (3) exerce, lors du montage de l'étalon (4) sur la surface de montage (51), sur le poinçon (2) une force de pression (F) le long de l'axe (Z) en direction de la surface de montage (51),
- le corps de base (1, 101) comportant à une première position le long de l'axe (Z) une première butée (11, 111) sur laquelle le poinçon (2) vient en appui à l'état de repos de sorte que le poinçon (2) soit supporté au niveau du corps de base (1, 101) dans une position définie le long l'axe (Z) et
- le corps de base (1, 101) comportant à une deuxième position le long de l'axe (Z) une deuxième butée (6, 61) qui est conçue comme une surface d'arrêt et qui est amenée en contact, lors du montage de l'étalon (4) au support (5, 105), avec une surface de référence (53) du support (5, 105), et
- l'élément de retenue (22) étant un mécanisme de serrage qui est conçu pour maintenir l'étalon (4) de manière serrée sur le poinçon (2) de sorte que l'étalon (4) soit poussé sur la surface de montage (51) avec la force de pression (F) lors du montage.

2. Dispositif selon la revendication 1, l'élément à ressort (3) étant formé d'un agencement d'une pluralité de ressorts de pression, les ressorts de pression étant disposés à distance les uns des autres entre le corps de base (1, 101) et le poinçon (2).

3. Dispositif selon la revendication 1 ou 2, le mécanisme de serrage étant un levier précontraint par ressort.

4. Dispositif selon l'une des revendications précédentes, le dispositif étant conçu pour générer la force de pression (F) par déplacement du poinçon (2) par rapport au corps de base (1) le long de l'axe (Z) de manière à bander l'élément à ressort (3).

5. Dispositif selon l'une des revendications 1 à 3, le dispositif étant conçu pour générer la force de pression (F) par déplacement du poinçon (2) par rapport au corps de base (101) le long de l'axe (Z) de manière à détendre l'élément à ressort (3).

6. Dispositif selon la revendication 4 ou 5, le trajet (W) du déplacement du poinçon (2) le long de l'axe (Z) étant prédéfini par la première butée (11, 111) du corps de base (1, 101) et la deuxième butée (6, 61) du corps de base (1, 101), la première butée (11, 111) positionnant le poinçon (2) au niveau du corps de base (1, 101) à une position le long de l'axe (Z) depuis laquelle le déplacement est rendu possible et la deuxième butée (6, 61) étant conçue pour positionner le corps de base (1, 101) par rapport au support (5, 105) le long de l'axe (Z) lors du montage de l'étalon (4).

7. Procédé de montage d'un étalon (4) d'un moyen de mesure de position sur une surface de montage (51) d'un support (5, 105) à l'aide d'un dispositif selon l'une des revendications précédentes,
**caractérisé par** les étapes de procédé suivantes :
- maintenir l'étalon (4) par serrage sur le poinçon (2) à l'aide de l'élément de retenue (22) ;
- positionner le corps de base (1, 101) sur le support (5, 105) le long de l'axe (Z) et exercer par le biais de l'élément à ressort (3) la force de pression (F) qui pousse l'étalon (4) le long de l'axe (Z) jusqu'à la surface de montage (51) ;
- détacher l'étalon (4) du poinçon (2).

8. Procédé selon la revendication 7, l'étalon (4) comportant un film adhésif (41) et la force de pression (F) poussant l'étalon (4) pourvu de son film adhésif (41) jusqu'à la surface de montage (51).
